# EUROPEAN PATENT APPLICATION

(11) **EP 4 756 210 A1**
(43) Date of publication of application: **10.06.2026**
(21) Application number: 24847624.4
(22) Date of filing: 03.04.2024
(51) Int. Cl.: F02M 35/104

(54) **INTAKE MANIFOLD, ENGINE AND VEHICLE**

(30) Priority: 28.07.2023 CN 202310947130
(71) Applicant: BYD Company Limited, Shenzhen, Guangdong 518118 (CN)
(72) Inventor: SHI, Junmei, Shenzhen, Guangdong 518118 (CN); LU, Guoxiang, Shenzhen, Guangdong 518118 (CN); YU, Qian, Shenzhen, Guangdong 518118 (CN); WANG, Fuzhen, Shenzhen, Guangdong 518118 (CN)
(74) Representative: Mathys & Squire
(86) International application number: PCT/CN2024/085837
(87) International publication number: WO 2025/025658

(57) **Abstract**

Provided are an intake manifold (100), an engine (200), and a vehicle (300). A vehicle (300) includes an engine (200). The engine (200) includes an intake manifold (100). The intake manifold (100) includes a cavity (1) and a plurality of fluid branch pipes (2). The cavity (1) is provided with an air inlet end (13). A flow guide portion (11) is formed on the cavity (1), and the flow guide portion (11) is located on a side of the cavity (1) along a first direction. The plurality of fluid branch pipes (2) are all connected to the other side of the cavity (1) along the first direction, and the plurality of fluid branch pipes (2) all communicate with the cavity (1). The flow guide portion (11) is opposite to at least one of the plurality of fluid branch pipes (2) that is adjacent to the air inlet end (13). The cavity (1) forms a vortex area (12) at the flow guide portion (11) and the at least one of the plurality of fluid branch pipes (2) that is adjacent to the air inlet end (13). The vortex area (12) is configured to allow fluid entering from the air inlet end (13) to form a vortex in the vortex area (12).

## Description

### CROSS-REFERENCE TO RELATED APPLICATIONS

This application claims priority to Chinese Patent Application No. "202310947130.5", filed by BYD Company Limited on July 28, 2023 and entitled "INTAKE MANIFOLD, ENGINE, AND VEHICLE", which is incorporated herein by reference in its entirety.

### TECHNICAL FIELD

The present disclosure relates to the field of vehicle technologies, and in particular, to an intake manifold, an engine, and a vehicle.

### BACKGROUND

An Atkinson cycle engine operates by delaying closure of an intake valve. That is, the intake valve is kept open for a period of time during an initial stage of a compression stroke, so that part of a gas mixture drawn into a cylinder is discharged, thereby achieving an effect that an expansion ratio is greater than a compression ratio, and accordingly, improving thermal efficiency of the engine. In the related art, when the engine is operating, intake air flows in an intake manifold, so that part of the gas mixture in the cylinder is easily drawn into other cylinders. Consequently, distribution of oil-gas mixture in the cylinders is not uniform, combustion of the cylinders in the engine is inconsistent, and thermal efficiency of the engine is reduced.

### SUMMARY

The present disclosure is intended to resolve at least one of the technical problems in the prior art. In view of this, an objective of the present invention to provide an intake manifold, so that distribution of an oil-gas mixture in fluid branch pipes is uniform. When the intake manifold is used in an engine, combustion of cylinders in the engine is consistent, thereby improving thermal efficiency of the engine.

Another objective of the present disclosure is to provide an engine using the foregoing intake manifold.

Yet another objective of the present disclosure is to provide a vehicle using the foregoing engine.

An intake manifold according to an embodiment of a first aspect of the present disclosure includes: a cavity, wherein the cavity is provided with an air inlet end, a flow guide portion is formed on the cavity, and the flow guide portion is located on a side of the cavity along a first direction; and a plurality of fluid branch pipes, wherein the plurality of fluid branch pipes are all connected to the other side of the cavity along the first direction, and the plurality of fluid branch pipes all communicate with the cavity. The flow guide portion is opposite to at least one of the plurality of fluid branch pipes that is adjacent to the air inlet end. The cavity forms a vortex area at the flow guide portion and the at least one of the plurality of fluid branch pipes that is adjacent to the air inlet end. The vortex area is configured to allow fluid entering from the air inlet end to form a vortex in the vortex area.

According to the intake manifold in this embodiment of the present disclosure, fluid flowing from the air inlet end may form a vortex at the flow guide portion, thereby preventing an oil-gas mixture in the fluid branch pipe adjacent to the air inlet end from flowing into other fluid branch pipes during air intake of the fluid branch pipe that is away from the air inlet end, ensuring uniform distribution of the fluid entering from the air inlet end and the oil-gas mixture in the fluid branch pipes, and accordingly, ensuring combustion consistency of a plurality of cylinders in the engine, and improving working stability of the engine. In addition, the intake manifold has a simple structure. Production costs of the intake manifold are reduced. A production rate of the intake manifold is improved.

According to some examples of the present disclosure, the intake manifold further includes: a fluid main pipe. An end of the fluid main pipe is connected to the air inlet end. The air inlet end communicates with the cavity through the fluid main pipe. An included angle between a tangent to the fluid main pipe and adjacent to a side of the flow guide portion and a tangent to the flow guide portion and away from a side of a central axis in a length direction of the cavity is α, wherein α satisfies: 5° ≤ α ≤ 80°.

According to some examples of the present disclosure, the fluid main pipe and the cavity are of an integrally formed member.

According to some examples of the present disclosure, the plurality of fluid branch pipes are arranged along the length direction of the cavity. An included angle between a tangent to the fluid main pipe and adjacent to a side of the fluid branch pipe, closest to the fluid main pipe, of the plurality of fluid branch pipes and a central axis of the fluid branch pipe, closest to the fluid main pipe, of the plurality of fluid branch pipes is β, wherein β satisfies: 5° ≤ β ≤ 80°.

According to some examples of the present disclosure, the flow guide portion is directly opposite to the at least one of the plurality of fluid branch pipes that is adjacent to the fluid main pipe.

According to some examples of the present disclosure, the flow guide portion is disposed on a side of the cavity that is away from the fluid main pipe along a second direction, and the second direction is perpendicular to the first direction.

According to some examples of the present disclosure, the flow guide portion is formed by an inner wall surface of the cavity protruding in a direction away from the central axis of the cavity.

According to some examples of the present disclosure, an inner wall surface of the flow guide portion includes one or more curved surfaces.

According to some examples of the present disclosure, a height of the flow guide portion in the first direction is 1/8 to 1 of a height of the cavity in the first direction.

According to some examples of the present disclosure, the plurality of fluid branch pipes are arranged along the length direction of the cavity. The plurality of fluid branch pipes include a first fluid branch pipe, a second fluid branch pipe, a third fluid branch pipe, and a fourth fluid branch pipe that are sequentially arranged in a direction away from the fluid main pipe. The flow guide portion is opposite to the first fluid branch pipe and the second fluid branch pipe.

According to some examples of the present disclosure, a point of the flow guide portion that is farthest from the central axis of the cavity is located between the first fluid branch pipe and the second fluid branch pipe.

According to some examples of the present disclosure, a point of the flow guide portion that is farthest from the central axis of the cavity is opposite to the first fluid branch pipe.

According to some examples of the present disclosure, an end of the flow guide portion that is away from the fluid main pipe is located between the second fluid branch pipe and the third fluid branch pipe.

According to some examples of the present disclosure, an end of the flow guide portion that is away from the fluid main pipe is opposite to the second fluid branch pipe.

According to some examples of the present disclosure, a joint between a side wall of the first fluid branch pipe that is adjacent to the fluid main pipe and the cavity is located on a side, adjacent to the central axis of the cavity, of a joint between a side wall of the first fluid branch pipe that is away from the fluid main pipe and the cavity.

According to some examples of the present disclosure, a distance in the first direction between the joint between the side wall of the first fluid branch pipe that is adjacent to the fluid main pipe and the cavity and the joint between the side wall of the first fluid branch pipe that is away from the fluid main pipe and the cavity is L, wherein L satisfies: 1 mm ≤ L ≤ 50 mm.

An engine according to an embodiment of a second aspect of the present disclosure includes the intake manifold according to the embodiment of the first aspect of the present disclosure.

A vehicle according to an embodiment of a third aspect of the present disclosure includes the engine according to the embodiment of the second aspect of the present disclosure.

Additional aspects and advantages of the present disclosure will be set forth in part in the following description, and in part will become apparent from the following description, or may be learned through the practice of the present disclosure.

### BRIEF DESCRIPTION OF DRAWINGS

The above and/or additional aspects and advantages of the present disclosure become apparent and easily understandable from the description of embodiments in conjunction with the following drawings, in which:
FIG. 1 is a diagram of an intake manifold according to an embodiment of the present disclosure;
FIG. 2 is a front view of an intake manifold according to an embodiment of the present disclosure;
FIG. 3 is an enlarged view of part A circled in FIG. 2;
FIG. 4 is a top view of an intake manifold according to an embodiment of the present disclosure;
FIG. 5 is a right view of an intake manifold according to an embodiment of the present disclosure;
FIG. 6 is a diagram of an intake manifold according to another embodiment of the present disclosure;
FIG. 7 is a front view of an intake manifold according to another embodiment of the present disclosure;
FIG. 8 is an enlarged view of part B circled in FIG. 7;
FIG. 9 is a top view of an intake manifold according to another embodiment of the present disclosure;
FIG. 10 is a right view of an intake manifold according to another embodiment of the present disclosure; and
FIG. 11 is a diagram of a vehicle according to an embodiment of the present disclosure.

### Reference numerals:

100: intake manifold; 200: engine; 300: vehicle;
1: cavity; 11: flow guide portion; 12: vortex area; 13: air inlet end;
2: fluid branch pipe; 21: first fluid branch pipe; 22: second fluid branch pipe;
23: third fluid branch pipe; 24: fourth fluid branch pipe;
3: fluid main pipe.

### DESCRIPTION OF EMBODIMENTS

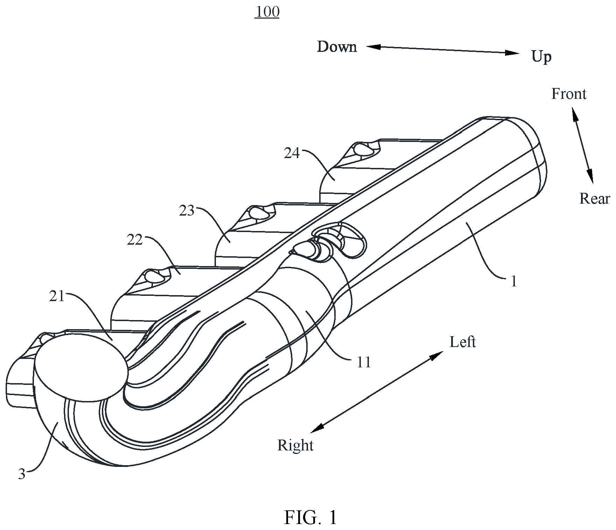

Embodiments of the present disclosure are described in detail below, and the embodiments described with reference to the accompanying drawings are examples. An intake manifold 100 according to an embodiment of the present disclosure will now be described below with reference to FIG. 1 to FIG. 10. In the following description of this application, an Atkinson cycle engine is used as an example to describe the intake manifold 100, but is not limited thereto.

As shown in FIG. 1, FIG. 2, and FIG. 6, an intake manifold 100 according to an embodiment of a first aspect of the present disclosure includes a cavity 1, a plurality of fluid branch pipes 2, and a fluid main pipe 3. In the description of the present disclosure, "a plurality of" indicates two or more.

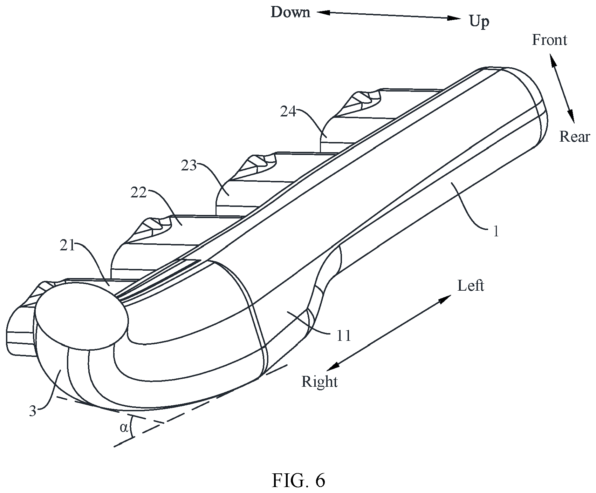

In particular, the cavity 1 is provided with an air inlet end 13. A flow guide portion 11 is formed on the cavity 1. The flow guide portion 11 is located on a side of the cavity 1 along a first direction (for example, an up-down direction shown in FIG. 1). The plurality of fluid branch pipes 2 are all connected to the other side of the cavity 1 along the first direction, and the plurality of fluid branch pipes 2 all communicate with the cavity 1. The cavity 1 is a structure having a hollow chamber, and the hollow chamber is also a pressure stabilizing cavity. For example, in examples shown in FIG. 1 to FIG. 4, the cavity 1 extends in a left-right direction. The air inlet end 13 is located at a right end of the cavity 1. The flow guide portion 11 is located on an upper side of the cavity 1 along the first direction. Upper ends of the plurality of fluid branch pipes 2 are all connected to a lower side of the cavity 1 along the first direction. In an example shown in FIG. 6, the flow guide portion 11 is located on a rear side of the cavity 1. The upper ends of the plurality of fluid branch pipes 2 are all connected to the lower side of the cavity 1 along the first direction. This facilitates flow of fluid between the interior of the cavity 1 and the fluid branch pipes 2, thereby improving smoothness of flow of fluid. It should be noted that a quantity and an arrangement manner of the fluid branch pipes 2 may be specifically set according to an actual situation to better satisfy an actual application.

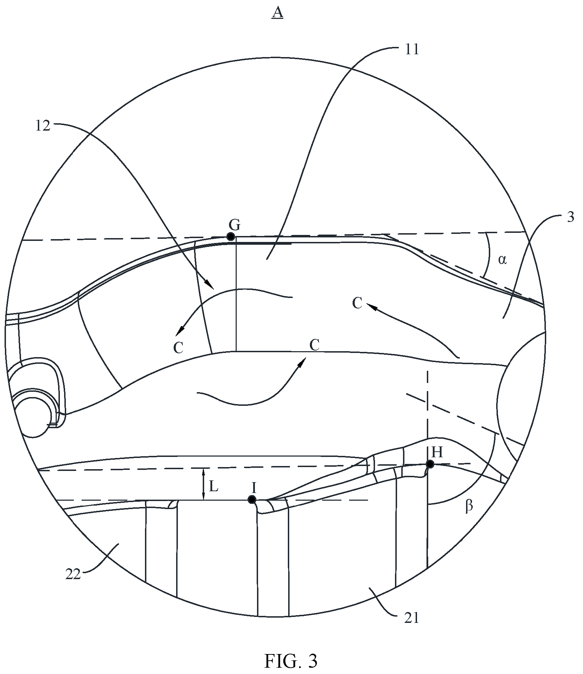

With reference to FIG. 1 to FIG. 4, the flow guide portion 11 is opposite to at least one of the plurality of fluid branch pipes 2 that is adjacent to the air inlet end 13. The cavity 1 forms a vortex area 12 at the flow guide portion 11 and the at least one of the plurality of fluid branch pipes 2 that is adjacent to the air inlet end 13. The vortex area 12 is configured to allow fluid entering from the air inlet end 13 to form a vortex in the vortex area 12 (for example, a flow path of fluid in the vortex area 12 is as shown in a direction indicated by arrow C in FIG. 3).

For example, in examples shown in FIG. 1 to FIG. 4, fluid may communicate with the cavity 1 through the air inlet end 13. The flow path of fluid flowing into the intake manifold 100 from the air inlet end 13 that is in the intake manifold 100 is generally as follows: The fluid enters into the cavity 1 along the air inlet end 13 and flows to the flow guide portion 11. Then, the fluid flows along the plurality of fluid branch pipes 2 into a cylinder (not shown) of the engine 200 that is corresponding to the plurality of fluid branch pipes 2. In this process, the fluid flowing into the cavity 1 from the air inlet end 13 changes a flow direction after being in contact with an inner wall surface of the flow guide portion 11, and forms a vortex area 12 having a low flow rate above the fluid branch pipe 2 adjacent to the air inlet end 13. Then, the fluid flows into the plurality of fluid branch pipes 2. Because a pressure of the vortex area 12 is higher than a pressure of a flow area around the vortex area 12, an oil-gas mixture, flowing back into the fluid branch pipe 2, in the cylinder of the engine 200 is prevented from flowing into the cavity 1, thereby avoiding a large difference in concentration of gas mixture flowing into the cylinders from the fluid branch pipes 2 due to a situation in which an oil-gas mixture flowing back in the fluid branch pipe 2 adjacent to the air inlet end 13 flows into other fluid branch pipes 2.

It should be noted that the engine 200 may also be an Atkinson engine, a Port Fuel Injection (PFI) premixed engine, a Miller cycle supercharged engine, or the like. In this way, a design of this solution uses a principle of fluid mechanics to dispose the flow guide portion 11, so that fluid flowing from the air inlet end 13 and the oil-gas mixture are distributed uniformly in the fluid branch pipes 2, and combustion of a plurality of cylinders in the engine 200 is consistent, thereby improving working stability of the engine 200. In addition, the intake manifold 100 has a simple structure without increasing complexity of processing the sample of the intake manifold 100 or increasing cycles of processing the sample of the intake manifold 100, thereby increasing a production rate of the intake manifold 100.

According to the intake manifold 100 in this embodiment of the present disclosure, fluid flowing from the air inlet end 13 may form a vortex at the flow guide portion 11, thereby preventing an oil-gas mixture in the fluid branch pipe 2 adjacent to the air inlet end 13 from flowing into other fluid branch pipes 2 during air intake of the fluid branch pipe 2 that is away from the air inlet end 13, ensuring uniform distribution of the fluid entering from the air inlet end 13 and the oil-gas mixture in the fluid branch pipes 2, and accordingly, ensuring combustion consistency of a plurality of cylinders in the engine 200, and improving working stability of the engine 200. In addition, the intake manifold 100 has a simple structure. Production costs of the intake manifold 100 are reduced. A production rate of the intake manifold 100 is improved.

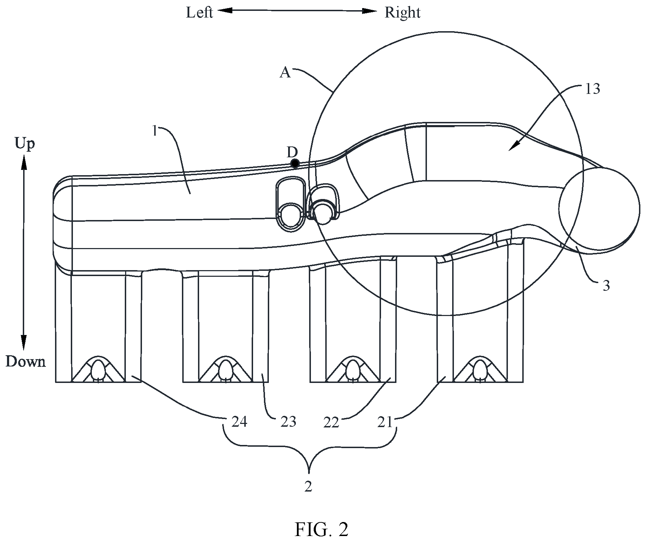

According to some embodiments of the present disclosure, with reference to FIG. 2, FIG. 3, FIG. 7, and FIG. 8, the intake manifold 100 further includes a fluid main pipe 3. An end of the fluid main pipe 3 is connected to the air inlet end 13. An included angle between a tangent to the fluid main pipe 3 and adjacent to a side of the flow guide portion 11 and a tangent to the flow guide portion 11 and away from a side of a central axis in a length direction of the cavity 1 is α, where α satisfies: 5° ≤ α ≤ 80°.

For example, in examples shown in FIG. 2 and FIG. 3, the fluid main pipe 3 is connected to the air inlet end 13. The interior of the fluid main pipe 3 is in communication with the interior of the cavity 1 through the air inlet end 13. The fluid main pipe 3 and the cavity 1 are of an integrally formed member. In this way, fluid inside the fluid main pipe 3 may flow into the cavity 1 via the air inlet end 13. An included angle between a tangent to the fluid main pipe 3 and at a right side and a tangent to the flow guide portion 11 and at an upper side is α (alternatively, for example, in an example shown in FIG. 6, when the flow guide portion 11 is located on a rear side of the cavity 1, an included angle between the tangent to the fluid main pipe 3 and at the right side and a tangent to the flow guide portion 11 and at a rear side is α).

When the included angle α between the tangent to the fluid main pipe 3 and adjacent to the side of the flow guide portion 11 and the tangent to the flow guide portion 11 and away from the side of the central axis in the length direction of the cavity 1 is less than 5°, after fluid enters into the cavity 1 through the air inlet end 13 along the fluid main pipe 3, an impact force between the fluid and an inner wall of the flow guide portion 11 is weakened, and the fluid does not easily form a vortex in the vortex area 12. In this way, the vortex in the vortex area 12 is reduced, and a difference between a pressure of the vortex area 12 and a pressure of fluid around the vortex area 12 is small, so that the oil-gas mixture in the fluid branch pipe 2 adjacent to the fluid main pipe 3 easily flows into the cavity 1, the oil-gas mixture enters into the fluid branch pipe 2 that is away from the fluid main pipe 3, and fuel efficiency of the engine 200 is reduced. When the included angle α between the tangent to the fluid main pipe 3 and adjacent to the side of the flow guide portion 11 and the tangent to the flow guide portion 11 and away from the side of the central axis in the length direction of the cavity 1 is greater than 80°, an included angle between fluid flowing from the fluid main pipe 3 and the tangent to the flow guide portion 11 and away from the side of the central axis in the length direction of the cavity 1 is too large. This is not conducive to fluid smoothly flowing to the vortex area 12 or fluid smoothly flowing into the fluid branch pipes 2.

In this way, the included angle α between the tangent to the fluid main pipe 3 and adjacent to the side of the flow guide portion 11 and the tangent to the flow guide portion 11 and away from the side of the central axis in the length direction of the cavity 1 is set to satisfy 5° ≤ α ≤ 80°, so that smoothness of fluid flowing from the fluid main pipe 3 to the fluid branch pipe 2 that is away from the fluid main pipe 3 is improved. Further, this helps fluid flowing from the fluid main pipe 3 form a vortex in the vortex area 12, thereby effectively preventing the oil-gas mixture in the fluid branch pipe 2 adjacent to the fluid main pipe 3 from being drawn away during air intake of the fluid branch pipe 2 that is away from the fluid main pipe 3, and improving combustion consistency of a plurality of cylinders in the engine 200.

According to some embodiments of the present disclosure, a plurality of fluid branch pipes 2 are arranged along the length direction of the cavity 1. An included angle between a tangent to the fluid main pipe 3 and adjacent to a side of the fluid branch pipe 2, closest to the fluid main pipe 3, of the plurality of fluid branch pipes 2 and a central axis of the fluid branch pipe 2, closest to the fluid main pipe 3, of the plurality of fluid branch pipes 2 is β, where β satisfies: 5° ≤ β ≤ 80°.

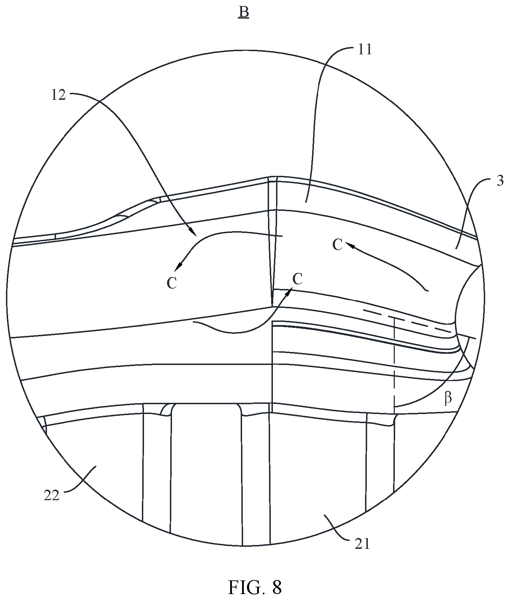

For example, in examples shown in FIG. 2 and FIG. 3, the plurality of fluid branch pipes 2 are all connected to a lower side of the cavity 1, and the plurality of fluid branch pipes 2 are sequentially arranged along the left-right direction. When the flow guide portion 11 is located on an upper side of the cavity 1, an included angle between a tangent to the fluid main pipe 3 and at a left side wall and a central axis of a rightmost fluid branch pipe 2 is β (alternatively, for example, in an example shown in FIG. 8, when the flow guide portion 11 is located on a rear side of the cavity 1, the included angle between the tangent to the fluid main pipe 3 and at the left side wall and the central axis of the rightmost fluid branch pipe 2 is β).

When the included angle β between the tangent to the fluid main pipe 3 and adjacent to the side of the fluid branch pipe 2, closest to the fluid main pipe 3, of the plurality of fluid branch pipes 2 and the central axis of the fluid branch pipe 2, closest to the fluid main pipe 3, of the plurality of fluid branch pipes 2 is less than 5°, fluid entering into the cavity 1 from the fluid main pipe 3 through the air inlet end 13 is substantially perpendicular to an upper wall surface of the flow guide portion 11. This is not conducive to fluid forming a vortex in the vortex area 12 or fluid smoothly flowing into the fluid branch pipes 2.

When the included angle β between the tangent to the fluid main pipe 3 and adjacent to the side of the fluid branch pipe 2, closest to the fluid main pipe 3, of the plurality of fluid branch pipes 2 and the central axis of the fluid branch pipe 2, closest to the fluid main pipe 3, of the plurality of fluid branch pipes 2 is greater than 80°, a flow direction of fluid flowing from the fluid main pipe 3 and the central axis of the cavity 1 are substantially on the same horizontal line. In this way, after the fluid flowing from the fluid main pipe 3 enters into the cavity 1 through the air inlet end 13, the impact force between the fluid and the inner wall of the flow guide portion 11 is weakened, so that the vortex in the vortex area 12 is reduced, and a difference between a pressure of the vortex area 12 and a pressure of fluid around the vortex area 12 is small, and accordingly, the oil-gas mixture in the fluid branch pipe 2 adjacent to the fluid main pipe 3 easily flows into the cavity 1. In this way, combustion of the cylinders in the engine 200 is easily inconsistent, so that fuel efficiency of the engine 200 is reduced. Further, the fluid flowing from the fluid main pipe 3 easily flows to an inlet of the fluid branch pipe 2, closest to the fluid main pipe 3, of the plurality of fluid branch pipes 2, thereby reducing distribution uniformity of fluid in the fluid branch pipes 2.

In this way, the included angle between the tangent to the fluid main pipe 3 and adjacent to the side of the fluid branch pipe 2, closest to the fluid main pipe 3, of the plurality of fluid branch pipes 2 and the central axis of the fluid branch pipe 2, closest to the fluid main pipe 3, of the plurality of fluid branch pipes 2 is set to satisfy 5° ≤ β ≤ 80°, thereby helping improve smoothness of fluid flowing into the fluid branch pipe 2 that is away from the fluid main pipe 3. Further, this helps fluid form a vortex in the vortex area 12, thereby further improving uniformity of fluid and the oil-gas mixture in the fluid branch pipes 2, and further improving combustion consistency of a plurality of cylinders in the engine 200.

According to some embodiments of the present disclosure, with reference to FIG. 1 to FIG. 3, the flow guide portion 11 is directly opposite to the at least one of the plurality of fluid branch pipes 2 that is adjacent to the fluid main pipe 3. For example, in an example shown in FIG. 2, the flow guide portion 11 is located above the cavity 1 and directly opposite to the at least one of the plurality of fluid branch pipes 2 that is adjacent to the fluid main pipe 3. In this way, the vortex area 12 is easily formed between the flow guide portion 11 and the at least one fluid branch pipe 2 that is adjacent to the fluid main pipe 3. After the fluid flowing from the fluid main pipe 3 changes the flow direction after being in contact with the inner wall surface of the flow guide portion 11 to form the vortex rotating along the up-down direction. A pressure of fluid in the vortex area 12 is higher than a pressure of fluid in the fluid branch pipe 2 directly opposite to the flow guide portion 11. In this way, an oil-gas mixture in the fluid branch pipe 2 directly opposite to the flow guide portion 11 is more effectively prevented from being drawn. Further, concentration of a gas mixture in the fluid branch pipe 2 adjacent to the fluid main pipe 3 can be prevented from being low, and concentration of a gas mixture in the fluid branch pipe 2 that is away from the fluid main pipe 3 can be prevented from being high, thereby effectively reducing the impact of nonuniformity of the oil-gas mixture on operation of the engine 200. In addition, when ensuring uniformity of the oil-gas mixture in the fluid branch pipes 2, only the cavity 1 at an end adjacent to the fluid main pipe 3 has a large volume, and the cavity 1 at an end away from the fluid main pipe 3 has an unchanged volume, so that an overall volume of the intake manifold 100 is moderate, thereby facilitating use and installation of the intake manifold 100.

According to some other embodiments of the present disclosure, with reference to FIG. 6 to FIG. 8, the flow guide portion 11 is disposed on a side of the cavity 1 that is away from the fluid main pipe 3 along a second direction (for example, a front-rear direction in FIG. 6). The second direction is perpendicular to the first direction. For example, in an example shown in FIG. 6, the flow guide portion 11 is located on a rear side of the cavity 1. The fluid main pipe 3 is opposite to the flow guide portion 11, and the fluid main pipe 3 extends obliquely to the flow guide portion along a direction substantially perpendicular to a plane in which the up-down direction and the left-right direction are located, thereby facilitating smooth flow of fluid to the flow guide portion 11. In this way, after fluid flowing from the fluid main pipe 3 flows into the cavity 1, the fluid forms a vortex after being in contact with a rear wall surface of the flow guide portion 11 in the cavity 1, thereby helping fluid form a vortex area 12 rotating in the front-rear direction at the flow guide portion 11, and improving combustion consistency of a plurality of cylinders in the engine 200. In addition, structures of the intake manifold 100 are diversified, and an arrangement position of the flow guide portion 11 may be selected according to an installation position of the intake manifold 100, thereby facilitating installation of the intake manifold 100 at different positions, and further facilitating use of the intake manifold 100.

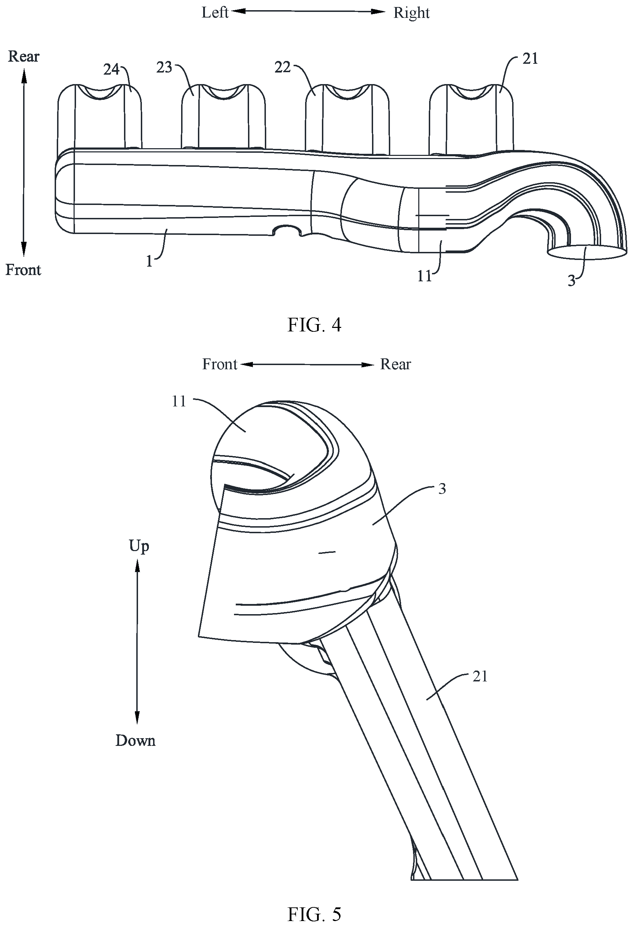

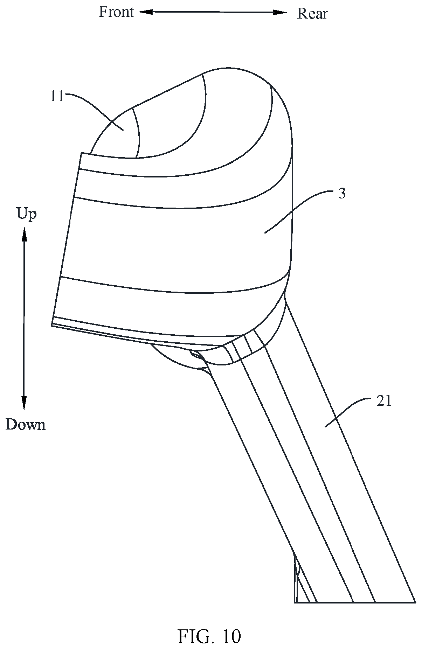

According to some embodiments of the present disclosure, with reference to FIG. 1, FIG. 5, FIG. 6, and FIG. 10, the flow guide portion 11 is formed by an inner wall surface of the cavity 1 protruding in a direction away from the central axis of the cavity 1. For example, in examples shown in FIG. 1 and FIG. 5, the flow guide portion 11 is of a bulge shape formed by the inner wall surface of the cavity 1 protruding upward. In examples shown in FIG. 6 and FIG. 10, the flow guide portion 11 is of a bulge shape formed by the inner wall surface of the cavity 1 protruding backward. This helps fluid collide with an inner wall of the flow guide portion 11 after entering into the cavity 1 through the air inlet end 13 along the fluid main pipe 3 to form the vortex area 12, thereby preventing fluid in the fluid branch pipe 2 adjacent to the fluid main pipe 3 from being drawn away during air intake of the fluid branch pipe 2 that is away from the fluid main pipe 3. Further, the flow guide portion 11 has a simple structure, and no extra components are required, thereby facilitating formation of the flow guide portion 11.

Optionally, the inner wall surface of the flow guide portion 11 includes one or more curved surfaces. That is, the inner wall surface of the flow guide portion 11 may be an integral curved surface, or may be formed by sequentially connecting a plurality curved surfaces. In this way, when the inner wall surface of the flow guide portion 11 includes a curved surface, the flow guide portion 11 has a simple structure, thereby facilitating production, and improving a production rate of the flow guide portion 11. When the inner wall surface of the flow guide portion 11 includes a plurality of curved surfaces, the flow guide portion 11 may be disposed in a plurality of shapes and sizes, thereby helping specifically set a shape and a size of the flow guide portion 11 according to an actual situation, and accordingly, improving adaptability of the flow guide portion 11.

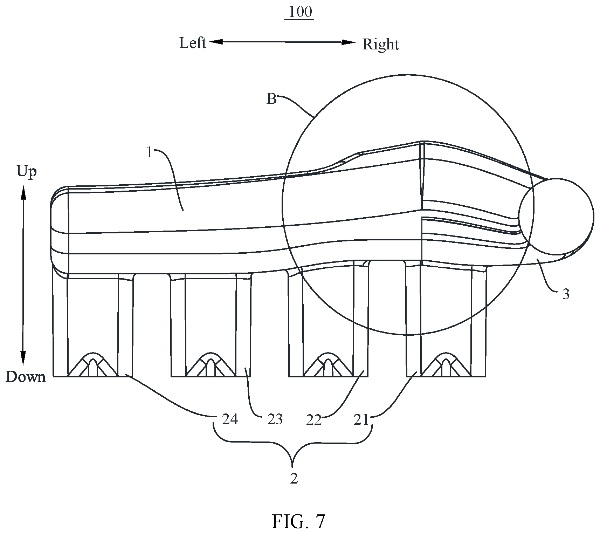

According to some embodiments of the present disclosure, with reference to FIG. 2, FIG. 3, and FIG. 7, a height of the flow guide portion 11 in the first direction is 1/8 to 1 of a height of the cavity 1 in the first direction. For example, in examples shown in FIG. 2 and FIG. 7, a distance between a highest point position of the flow guide portion 11 (for example, a position in which a solid circle G is located as shown in FIG. 3) and a lowest point position of the flow guide portion 11 (for example, a position in which a solid circle D is located as shown in FIG. 2) is 1/8 to 1 (including endpoint values) of a height of a stable cavity in the up-down direction.

When a height of the flow guide portion 11 in the first direction is less than 1/8 of a height of the cavity 1 in the first direction, a small vortex is generated, so that the oil-gas mixture in the fluid branch pipe 2 adjacent to the fluid main pipe 3 is easily drawn away during air intake of the fluid branch pipe 2 that is away from the fluid main pipe 3. Consequently, oil-gas mixtures in the plurality of fluid branch pipes 2 in the intake manifold 100 of the engine 200 interfere with each other, so that combustion of a plurality of cylinders in the engine 200 is inconsistent. When the height of the flow guide portion 11 in the first direction is greater than the height of the cavity 1 in the first direction, the flow guide portion 11 has a large volume, so that an overall structure of the intake manifold 100 is large. This is not conducive to installation and testing of the intake manifold 100 and space arrangement of the engine 200.

In this way, the height of the flow guide portion 11 in the first direction is set to be 1/8 to 1 of the height of the cavity 1 in the first direction, thereby helping fluid uniformly flow into a plurality of fluid branch pipes 2, preventing the oil-gas mixture in the fluid branch pipe 2 adjacent to the fluid main pipe 3 from being drawn away during air intake of the fluid branch pipe 2 that is away from the fluid main pipe 3, preventing fluid in the plurality of fluid branch pipes 2 in the intake manifold 100 of the engine 200 from interfering with each other, and accordingly, allowing combustion of a plurality of cylinders in the engine 200 to be consistent. Working stability of the engine 200 is improved. In addition, a volume of the cavity 1 is minimized, thereby facilitating installation and arrangement of the intake manifold 100 and the arrangement of each component of the engine 200. In addition, an overall structure of the engine 200 is more compact, thereby facilitating installation and use of the engine 200. It should be noted that when the flow guide portion 11 is located on a side of the cavity 1 that is away from the fluid main pipe 3 along the second direction, a height of the flow guide portion 11 in the front-rear direction is 1/8 to 1 (including endpoint values) of a height of the cavity 1 in the second direction, thereby facilitating installation and arrangement of the intake manifold 100, allowing the overall structure of the engine 200 to be more compact, and facilitating installation and use of the engine 200.

Further, with reference to FIG. 2 and FIG. 7, a plurality of fluid branch pipes 2 are arranged along a length direction of the cavity 1. The plurality of fluid branch pipes 2 include a first fluid branch pipe 21, a second fluid branch pipe 22, a third fluid branch pipe 23, and a fourth fluid branch pipe 24 that are sequentially arranged in a direction away from the fluid main pipe 3. The flow guide portion 11 is opposite to the first fluid branch pipe 21 and the second fluid branch pipe 22.

For example, in examples shown in FIG. 2 and FIG. 7, the plurality of fluid branch pipes 2 are the first fluid branch pipe 21, the second fluid branch pipe 22, the third fluid branch pipe 23, and the fourth fluid branch pipe 24 sequentially from right to left. In this way, fluid flowing from the fluid main pipe 3 may form a vortex above inlets of the first fluid branch pipe 21 and the second fluid branch pipe 22, so that the oil-gas mixture in the first fluid branch pipe 21 and the second fluid branch pipe 22 does not easily flow back into the cavity 1, thereby preventing oil-gas mixture in the first fluid branch pipe 21 and the second fluid branch pipe 22 from being drawn away during air intake of the third fluid branch pipe 23 and the fourth fluid branch pipe 24. Further, distribution of fluid and the oil-gas mixture in the first fluid branch pipe 21, the second fluid branch pipe 22, the third fluid branch pipe 23, and the fourth fluid branch pipe 24 is uniform, so that combustion of the cylinders respectively corresponding to the first fluid branch pipe 21, the second fluid branch pipe 22, the third fluid branch pipe 23, and the fourth fluid branch pipe 24 is consistent, thereby improving use reliability of the engine 200.

According to some embodiments of the present disclosure, with reference to FIG. 2, a point of the flow guide portion 11 that is farthest from the central axis of the cavity 1 is located between the first fluid branch pipe 21 and the second fluid branch pipe 22. This helps form a vortex above the inlets of the first fluid branch pipe 21 and the second fluid branch pipe 22, so that a pressure of the vortex area 12 is higher than a pressure of fluid in the first fluid branch pipe 21 and a pressure of fluid in the second fluid branch pipe 22, thereby facilitating more uniform distribution of the fluid and the oil-gas mixture in the first fluid branch pipe 21, the second fluid branch pipe 22, the third fluid branch pipe 23, and the fourth fluid branch pipe 24.

According to some other embodiments of the present disclosure, a point of the flow guide portion 11 that is farthest from the central axis of the cavity 1 is opposite to the first fluid branch pipe 21. Because a distance between the first fluid branch pipe 21 and the fluid main pipe 3 is closer than a distance between the other fluid branch pipe 2 and the fluid main pipe 3, if an oil-gas mixture in the first fluid branch pipe 21 flows back into the cavity 1, the oil-gas mixture may flow together with fluid in the cavity 1 to other fluid branch pipes 2. In this way, the point of the flow guide portion 11 that is farthest from the central axis of the cavity 1 is set to be opposite to the first fluid branch pipe 21, thereby helping form a vortex above an inlet of the first fluid branch pipe 21, and improving an effect of the vortex formed in the vortex area 12 on the oil-gas mixture in the first fluid branch pipe 21. The oil-gas mixture in the first fluid branch pipe 21 is even less likely to flow into the cavity 1. Further, this helps reduce a length of the flow guide portion 11 on the cavity 1, thereby reducing a volume of the intake manifold 100, and further facilitating installation of the intake manifold 100.

According to some embodiments of the present disclosure, with reference to FIG. 2, an end of the flow guide portion 11 that is away from the fluid main pipe 3 (a position in which a solid circle D is located as shown in FIG. 2) is located between the second fluid branch pipe 22 and the third fluid branch pipe 23. In this way, a vortex is easily formed above the inlets of the first fluid branch pipe 21 and the second fluid branch pipe 22, and there is no need to form a vortex area 12 in a position of the cavity 1 that is opposite to the third fluid branch pipe 23 and the fourth fluid branch pipe 24. When fluid entering into the cavity 1 from the fluid main pipe 3 flows to the third fluid branch pipe 23 and the fourth fluid branch pipe 24, the oil-gas mixture in the first fluid branch pipe 21 and the second fluid branch pipe 22 can be effectively prevented from being drawn. In addition, the oil-gas mixture in the third fluid branch pipe 23 and the fourth fluid branch pipe 24 can also be prevented from flowing back, so that concentration of a gas mixture of the fluid branch pipes 2 is uniform, thereby helping improve combustion consistency of a plurality of cylinders in the engine 200. In addition, a volume of the cavity 1 corresponding to the third fluid branch pipe 23 and the fourth fluid branch pipe 24 can be reduced, thereby reducing interference between the cavity 1 and other components when the intake manifold 100 is installed, and further facilitating installation and use of the intake manifold 100.

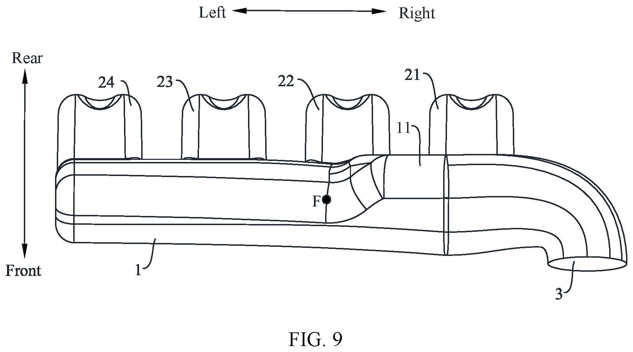

According to some other embodiments of the present disclosure, with reference to FIG. 9, an end of the flow guide portion 11 that is away from the fluid main pipe 3 (for example, a position in which a solid circle F is located as shown in FIG. 9) is opposite to the second fluid branch pipe 22. This helps reduce a length of the flow guide portion 11 in the length direction of the cavity 1. That is, a size of the flow guide portion 11 along the left-right direction can be reduced, thereby reducing a volume of the intake manifold 100, allowing arrangement of each component of the engine 200 to be compact, and facilitating installation of the intake manifold 100 at a position with a limited space. This can also reduce an amount of material of the intake manifold 100, and reduce use costs of the intake manifold 100.

According to some embodiments of the present disclosure, with reference to FIG. 2 and FIG. 3, a joint between a side wall of the first fluid branch pipe 21 that is adjacent to the fluid main pipe 3 and the cavity 1 (for example, a position in which a solid circle H is located as shown in FIG. 3) is located on a side, adjacent to the central axis of the cavity 1, of a joint between a side wall of the first fluid branch pipe 21 that is away from the fluid main pipe 3 and the cavity 1 (for example, a position in which a solid circle I is located as shown in FIG. 3).

For example, in examples shown in FIG. 2 and FIG. 3, a joint between a right side wall of the first fluid branch pipe 21 and the cavity 1 is located above a joint between a left side wall of the first fluid branch pipe 21 and the cavity 1. In this way, a specific included angle is formed between a flow direction of fluid flowing from the fluid main pipe 3 into the cavity 1 and the central axis of the first fluid branch pipe 21, so that the fluid flows upward obliquely after the fluid enters into the cavity 1 along the fluid main pipe 3. Therefore, the fluid is prevented from directly entering into the first fluid branch pipe 21, and the oil-gas mixture in the first fluid branch pipe 21 is driven to flow into other fluid branch pipes 2, thereby preventing the oil-gas mixture in the fluid branch pipes 2 from being not uniform.

According to some embodiments of the present disclosure, with reference to FIG. 2, FIG. 3, FIG. 7, and FIG. 8, a distance in the first direction between the joint between the side wall of the first fluid branch pipe 21 that is adjacent to the fluid main pipe 3 and the cavity 1 and the joint between the side wall of the first fluid branch pipe 21 that is away from the fluid main pipe 3 and the cavity 1 is L, where L satisfies: 1 mm ≤ L ≤ 50 mm. For example, in an example shown in FIG. 3, a distance in the first direction between a joint between a right side wall of the first fluid branch pipe 21 and the cavity 1 and a joint between a left side wall of the first fluid branch pipe 21 and the cavity 1 is L.

When the distance L in the first direction between the joint between the side wall of the first fluid branch pipe 21 that is adjacent to the fluid main pipe 3 and the cavity 1 and the joint between the side wall of the first fluid branch pipe 21 that is away from the fluid main pipe 3 and the cavity 1 is less than 1 mm, the right side wall of the first fluid branch pipe 21 and the left side wall of the first fluid branch pipe 21 are substantially on the same horizontal line along the left-right direction. The fluid does not easily form a vortex. In addition, the fluid is directly mixed with the oil-gas mixture in the first fluid branch pipe 21 easily, and the oil-gas mixture in the first fluid branch pipe 21 is easily driven to flow into other fluid branch pipes 2, so that concentration of a gas mixture in the fluid branch pipes 2 is inconsistent, thereby reducing combustion consistency of the cylinders of the engine 200, and impacting use of the engine 200.

When the distance L in the first direction between the joint between the side wall of the first fluid branch pipe 21 that is adjacent to the fluid main pipe 3 and the cavity 1 and the joint between the side wall of the first fluid branch pipe 21 that is away from the fluid main pipe 3 and the cavity 1 is greater than 50 mm, along the first direction, a length of the first fluid branch pipe 21 increases, thereby increasing a size of the intake manifold 100. A space of the engine 200 is limited. This is not conducive to space arrangement of the engine 200. Further, a spacing between the right side wall of the first fluid branch pipe 21 and the left side wall of the first fluid branch pipe 21 increases, thereby reducing a volume of the vortex area 12. This is not conducive to flow of fluid flowing from the fluid main pipe 3.

In this way, the distance L in the first direction between the joint between the side wall of the first fluid branch pipe 21 that is adjacent to the fluid main pipe 3 and the cavity 1 and the joint between the side wall of the first fluid branch pipe 21 that is away from the fluid main pipe 3 and the cavity 1 is set to satisfy 1 mm ≤ L ≤ 50 mm, thereby helping preventing fluid between a plurality of cylinders in the engine 200 from being mutually drawn and interfering with each other, and improving uniformity and combustion stability between the plurality of cylinders in the engine 200. Further, a situation in which the first fluid branch pipe 21 is too long to be conducive to installation of the intake manifold 100 is avoided. That is, in this application, a design of the flow guide portion 11 takes into account uniformity of both gas and oil in the fluid branch pipes 2 of the intake manifold 100 in a limited arrangement space. In addition, the intake manifold 100 does not have a low point, so that there are no problems with water condensation and icing.

Sample processing and test verification are performed on a solution of the intake manifold 100 of an Atkinson cycle engine with the flow guide portion 11 in this application. Test results show that combustion consistency of the cylinders of the engine 200 is excellent, and effectiveness of the flow guide portion 11 of the intake manifold 100 in this application in solving the problem of interference of the cylinders of the intake manifold 100 in the Atkinson cycle engine is proved. In addition, the flow guide portion 11 has a simple design without increasing complexity of processing a sample of the intake manifold 100 or increasing cycles and costs of processing the sample. In addition, the flow guide portion 11 may minimize a volume and a length of the intake manifold 100, and is suitable for a compact arrangement space of the engine 200 to achieve flexible arrangement.

According to some embodiments of the present disclosure, at least one flow guide plate (not shown) is disposed on an inner wall surface of the cavity 1. For example, when the oil-gas mixture in the fluid branch pipe 2 flows back into the cavity 1, the oil-gas mixture flows back into a corresponding fluid branch pipe 2 again under an action of the flow guide plate, thereby preventing the oil-gas mixture in the fluid branch pipes 2 from being mixed, and improving combustion consistency of the cylinders of the engine 200. In addition, after fluid enters into the cavity 1 along the fluid main pipe 3, the fluid flows into the fluid branch pipe 2 that is away from the fluid main pipe 3 along the flow guide plate, thereby improving distribution uniformity of fluid in the fluid branch pipes 2.

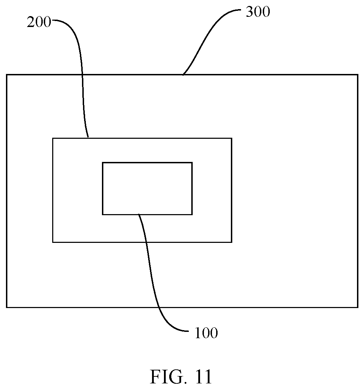

With reference to FIG. 11, an engine 200 according to an embodiment of a second aspect of the present disclosure includes the intake manifold 100 according to the embodiment of the first aspect of the present disclosure.

The engine 200 according to the embodiment of the present disclosure uses the foregoing intake manifold 100, thereby allowing combustion of a plurality of cylinders in the engine 200 to be consistent, and improving working stability of the engine 200.

With reference to FIG. 11, a vehicle 300 according to an embodiment of a third aspect of the present disclosure includes the engine 200 according to the embodiment of the second aspect of the present disclosure.

The vehicle 300 according to the embodiment of the present disclosure uses the foregoing engine 200, thereby improving use performance of the vehicle 300.

Other structures and operations of the engine 200 and the vehicle 300 according to the embodiment of the present disclosure are known to a person of ordinary skill in the art, which will not be described in detail herein.

In the description of the present disclosure, it will be understood that a directional or positional relationship indicated by terms "length", "width", "thickness", "upper", "lower", "front", "rear", "left", "right", "inner", and the like is based on a directional or positional relationship shown in the accompanying drawings, which is only for the purpose of facilitating the description of the present disclosure and simplifying the description, and is not intended to indicate or imply that a mentioned apparatus or element must have a specific direction, be constructed and operated in a specific direction. Therefore, these terms should not be construed as limiting the present disclosure.

In the description of this specification, descriptions referring to terms "one embodiment", "some embodiments", "example embodiments", "examples", "specific examples" or "some examples" indicate that specific features, structures, materials or characteristics described in connection with this embodiment or example are included in at least one embodiment or example of the present disclosure. In this specification, the schematic representations of the foregoing terms are not necessarily aimed at the same embodiment or example.

Although the embodiments of the present disclosure have been shown and described, a person of ordinary skill in the art can understand that many changes, modifications, substitutions, and variations can be made to these embodiments without departing from the principles and purposes of the present disclosure, and the scope of the present disclosure is defined by the claims and their equivalents.

It will be noted that terms "first" and "second" are merely intended for a purpose of description, and cannot be understood as indicating or implying relative importance or implicitly indicating a quantity of indicated technical features. Therefore, a feature limited by "first" or "second" may explicitly or implicitly include one or more features. Further, in the description of the present disclosure, unless otherwise specified, "a plurality of" indicates two or more.

## Claims

1. An intake manifold (100), comprising:
a cavity (1), the cavity (1) being provided with an air inlet end (13), a flow guide portion (11) being formed on the cavity (1), and the flow guide portion (11) being located on a side of the cavity (1) along a first direction; and
a plurality of fluid branch pipes (2), the plurality of fluid branch pipes (2) being all connected to the other side of the cavity (1) along the first direction, and the plurality of fluid branch pipes (2) all communicating with the cavity (1);
the flow guide portion (11) being opposite to at least one of the plurality of fluid branch pipes (2) that is adjacent to the air inlet end (13), the cavity (1) forming a vortex area (12) at the flow guide portion (11) and the at least one of the plurality of fluid branch pipes (2) that is adjacent to the air inlet end (13), and the vortex area (12) being configured to allow fluid entering from the air inlet end (13) to form a vortex in the vortex area (12).

2. The intake manifold (100) according to claim 1, further comprising:
a fluid main pipe (3), wherein an end of the fluid main pipe (3) is connected to the air inlet end (13), and an included angle between a tangent to the fluid main pipe (3) and adjacent to a side of the flow guide portion (11) and a tangent to the flow guide portion (11) and away from a side of a central axis in a length direction of the cavity (1) is α, wherein α satisfies: 5° ≤ α ≤ 80°.

3. The intake manifold (100) according to claim 2, wherein the fluid main pipe (3) and the cavity (1) are of an integrally formed member.

4. The intake manifold (100) according to claim 2 or 3, wherein the plurality of fluid branch pipes (2) are arranged along the length direction of the cavity (1), and an included angle between a tangent to the fluid main pipe (3) and adjacent to a side of the fluid branch pipe (2), closest to the fluid main pipe (3), of the plurality of fluid branch pipes (2) and a central axis of the fluid branch pipe (2), closest to the fluid main pipe (3), of the plurality of fluid branch pipes (2) is β, wherein β satisfies: 5° ≤ β ≤ 80°.

5. The intake manifold (100) according to any one of claims 1 to 4, wherein the flow guide portion (11) is directly opposite to the at least one of the plurality of fluid branch pipes (2) that is adjacent to the fluid main pipe (3).

6. The intake manifold (100) according to any one of claims 1 to 5, wherein the flow guide portion (11) is formed by an inner wall surface of the cavity (1) protruding in a direction away from the central axis of the cavity (1).

7. The intake manifold (100) according to claim 6, wherein an inner wall surface of the flow guide portion (11) comprises one or more curved surfaces.

8. The intake manifold (100) according to any one of claims 1 to 7, wherein a height of the flow guide portion (11) in the first direction is 1/8 to 1 of a height of the cavity (1) in the first direction.

9. The intake manifold (100) according to any one of claims 1 to 7, wherein the flow guide portion (11) is disposed on a side of the cavity (1) that is away from the fluid main pipe (3) along a second direction, and the second direction is perpendicular to the first direction.

10. The intake manifold (100) according to any one of claims 1 to 9, wherein the plurality of fluid branch pipes (2) are arranged along the length direction of the cavity (1), the plurality of fluid branch pipes (2) comprise a first fluid branch pipe (21), a second fluid branch pipe (22), a third fluid branch pipe (23), and a fourth fluid branch pipe (24) that are sequentially arranged in a direction away from the fluid main pipe (3), and the flow guide portion (11) is opposite to the first fluid branch pipe (21) and the second fluid branch pipe (22).

11. The intake manifold (100) according to claim 10, wherein a point of the flow guide portion (11) that is farthest from the central axis of the cavity (1) is located between the first fluid branch pipe (21) and the second fluid branch pipe (22).

12. The intake manifold (100) according to claim 10, wherein a point of the flow guide portion (11) that is farthest from the central axis of the cavity (1) is opposite to the first fluid branch pipe (21).

13. The intake manifold (100) according to any one of claims 10 to 12, wherein an end of the flow guide portion (11) that is away from the fluid main pipe (3) is located between the second fluid branch pipe (22) and the third fluid branch pipe (23).

14. The intake manifold (100) according to any one of claims 10 to 12, wherein an end of the flow guide portion (11) that is away from the fluid main pipe (3) is opposite to the second fluid branch pipe (22).

15. The intake manifold (100) according to any one of claims 10 to 14, wherein a joint between a side wall of the first fluid branch pipe (21) that is adjacent to the fluid main pipe (3) and the cavity (1) is located on a side, adjacent to the central axis of the cavity (1), of a joint between a side wall of the first fluid branch pipe (21) that is away from the fluid main pipe (3) and the cavity (1).

16. The intake manifold (100) according to claim 15, wherein a distance in the first direction between the joint between the side wall of the first fluid branch pipe (21) that is adjacent to the fluid main pipe (3) and the cavity (1) and the joint between the side wall of the first fluid branch pipe (21) that is away from the fluid main pipe (3) and the cavity (1) is L, wherein L satisfies: 1 mm ≤ L ≤ 50 mm.

17. An engine (200), comprising the intake manifold (100) according to any one of claims 1 to 16.

18. A vehicle (300), comprising the engine (200) according to claim 17.
